# EUROPÄISCHE PATENTSCHRIFT

(11) **EP 4 330 558 B1**
(45) Veröffentlichungstag und Bekanntmachung des Hinweises auf die Patenterteilung: **21.01.2026**
(21) Anmeldenummer: 22727024.6
(22) Anmeldetag: 29.04.2022
(51) Int. Cl.: F15B 15/14, B23Q 11/00, B24B 41/06, B25J 9/10, B25J 9/16, B25J 11/00, F15B 11/036, B24B 23/02, F15B 15/24, F15B 15/28

(54) **PNEUMATISCHER LINEARAKTOR**
PNEUMATIC LINEAR ACTUATOR
ACTIONNEUR LINÉAIRE PNEUMATIQUE

(30) Priorität: 29.04.2021 DE 102021111064
(43) Veröffentlichungstag der Anmeldung: 06.03.2024
(73) Patentinhaber: FerRobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB
(86) Internationale Anmeldenummer: PCT/EP2022/061487
(87) Internationale Veröffentlichungsnummer: WO 2022/229387

(56) Entgegenhaltungen:
- EP-A2- 0 786 599
- EP-A2- 3 012 067
- CN-A- 102 979 781
- DE-A1- 1 803 477
- DE-A1- 2 024 716
- US-A- 2 997 026
- US-A1- 2021 010 492

## Beschreibung

### TECHNISCHES GEBIET

Die vorliegende Erfindung betrifft das Gebiet der pneumatischen Aktoren, insbesondere eine kostengünstige Bauweise einer Vorrichtung, die in bestimmten Anwendungen doppelwirkende Pneumatikzylinder ersetzen kann.

### HINTERGRUND

Zum Stand der Technik wird auf die Publikationen CN 102 979 781 A, EP 0 786 599 A2, und US 2021/010492 A1 verwiesen.

Es gibt verschiedene Typen von pneumatischen Aktoren. Insbesondere Pneumatikzylinder werden in einer Vielzahl von Anwendungen eingesetzt. Es ist auch bekannt, pneumatische Aktoren für die Kraftregelung zu verwenden, beispielsweise bei der automatisierten, robotergestützten Bearbeitung von Oberflächen oder allgemein in Anwendungen, in denen ein Roboter z.B. mit einem Werkzeug eine Oberfläche "sanft" (ohne Stoß) berühren soll. Ein Beispiel einer pneumatischen Handhabungsvorrichtung (*handling device*) für Anwendung bei Industrierobotern ist in US 10,906,177 beschrieben. Bekannte Vorrichtungen und Systeme enthalten unter anderem Balgzylinder, Luftmuskel oder doppeltwirkende Pneumatikzylinder, was derartige Vorrichtung komplex und in der Herstellung teuer macht. Ein Anforderung an eine derartige Handhabungsvorrichtung für die robotergestützten Oberflächenbearbeitung ist die Fähigkeit, Biegemomente aufnehmen zu können.

Der Erfinder hat sich die Aufgabe gestellt, einen in der Herstellung kostengünstigen pneumatischen Linearaktor zu schaffen, der insbesondere für Anwendungen im Bereich der robotergestützten Oberflächenbearbeitung geeignet ist.

### ZUSAMMENFASSUNG

Die oben genannte Aufgabe wird durch die Vorrichtung gemäß Patentanspruch 1 gelöst. Verschiedene Ausführungsformen und Weiterentwicklungen sind Gegenstand der abhängigen Patentansprüche.

Es wird eine Vorrichtung beschrieben. Gemäß einem Ausführungsbeispiel weist die Vorrichtung folgendes auf: ein erstes Gehäuse mit einer ersten Druckkammer; eine von außen in die erste Druckkammer des ersten Gehäuses eingeführte erste Stange; eine erste Montageplatte und eine zweite Montageplatte, wobei die erste Montageplatte mit der ersten Stange fest verbunden ist und wobei die zweite Montageplatte mit dem ersten Gehäuse fest verbunden ist; eine um die erste Stange angeordnete erste Stangendichtung, welche die erste Druckkammer abdichtet; und eine an dem ersten Gehäuse montierte erste Stangenführung, welche dazu ausgebildet ist, die erste Stange entlang ihrer Längsachse zu führen. In der Druckkammer ist kein Kolben angeordnet. Vielmehr ist im Inneren der ersten Druckkammer ein nicht abgedichteter Ringspalt zwischen der ersten Stange und einer Innenwand der ersten Druckkammer vorhanden, sodass ein in der ersten Druckkammer vorhandener Gasdruck sich in der gesamten ersten Druckkammer bis hin zur ersten Stangendichtung ausbreiten kann. Die Vorrichtung umfasst ferner ein Rückstellelement, welches so angeordnet ist, dass es einer von dem Gasdruck bewirkten Kraft auf die erste Stange entgegenwirken kann, wobei das Rückstellelement außerhalb des ersten Gehäuses zwischen der ersten Montageplatte und der zweiten Montageplatte angeordnet ist, wobei das Rückstellelement dazu ausgebildet ist, eine anziehende Kraft zwischen der ersten Montageplatte und der zweiten Montageplatte zu erzeugen.

Weitere Ausführungsbeispiele betreffen Handhabungsvorrichtungen bzw. Linearaktoren mit einer oder mehreren der erwähnten Vorrichtung.

### KURZE BESCHREIBUNG DER ZEICHNUNGEN

Verschiedene Implementierungen werden nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die den dargestellten Ausführungsbeispielen zugrunde liegenden Prinzipien darzustellen.
Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist; der Linearaktor bewirkt eine teilweise mechanische Entkopplung von Industrieroboter und Schleifmaschine.
Figur 2 illustriert ein Beispiel eines pneumatischen Linearaktors (Handhabungsvorrichtung (*handling device*) in einer Seitenansicht.
Figur 3 ist eine schematische Längsschnittdarstellung eines ersten Ausführungsbeispiels.
Figur 4 ist eine schematische Längsschnittdarstellung eines zweiten Ausführungsbeispiels.
Figur 5 ist eine schematische Längsschnittdarstellung eines dritten Ausführungsbeispiels bei mittlerer Auslenkung.
Figur 6 illustriert das Beispiel aus Fig. 5 bei minimaler Auslenkung.

### DETAILLIERTE BESCHREIBUNG

Bei der robotergestützten Oberflächenbearbeitung wird eine Werkzeugmaschine (z.B. eine Schleifmaschine, eine Bohrmaschine, eine Fräsmaschine, eine Poliermaschine und dgl.) von einem Manipulator, beispielsweise einem Industrieroboter, geführt. Dabei kann die Werkzeugmaschine auf unterschiedliche Weise mit dem sogenannten Endeffektor-Flansch, dessen Lage den TCP (*Tool Center Point*) des Manipulators festlegt, gekoppelt sein; der Manipulator kann in der Regel Position und Orientierung des TCP praktisch beliebig einstellen, um eine Werkzeugmaschine auf einer Trajektorie z.B. parallel zu einer Oberfläche eines Werkstücks zu bewegen. Industrieroboter sind üblicherweise positionsgeregelt, was eine präzise Bewegung des TCP entlang der gewünschten Trajektorie ermöglicht. Das Folgende gilt jedoch nicht nur für die robotergestützte Oberflächenbearbeitung, sondern allgemein für Robotikanwendungen, bei denen ein Roboter mit einem Werkzeug eine Oberfläche mehr oder weniger sanft (ohne Stoß) kontaktieren muss. Dies kann z.B. auch auf *Pick-and-Place*-Anwendungen zutreffen.

In vielen Anwendungen ist eine Regelung der Prozesskraft (z.B. Kraft beim Kontaktieren eines Werkstücks oder Kontaktkraft bei der Oberflächenbearbeitung wie z.B. Schleifkraft) nötig, was mit herkömmlichen Industrierobotern oft nur schwer mit hinreichender Genauigkeit realisierbar ist. Die großen und schweren Armsegmente eines Industrieroboters besitzen eine zu große Massenträgheit, als dass ein Regler (*closed-loop controller*) rasch genug auf Schwankungen der Prozesskraft reagieren könnte. Um dieses Problem zu lösen, kann zwischen dem Endeffektor-Flansch des Manipulators und der Werkzeugmaschine ein im Vergleich zum Industrieroboter kleiner (und leichter) Linearaktor angeordnet sein, der den Endeffektor-Flansch des Manipulators mit der Werkzeugmaschine koppelt. Der Linearaktor regelt während der Oberflächenbearbeitung lediglich die Prozesskraft (also die Anpresskraft zwischen Werkzeug und Werkstück), während der Manipulator das Werkzeug bzw. die Werkzeugmaschine samt Linearaktor positionsgeregelt entlang der gewünschten Trajektorie bewegt. Durch die Kraftregelung kann der Linearaktor Ungenauigkeiten in der Lage und der Form des zu bearbeitenden Werkstücks sowie auch Ungenauigkeiten der Trajektorie des Manipulators (innerhalb gewisser Grenzen) ausgleichen. Nichtsdestotrotz gibt es Roboter, die in der Lage sind, auch ohne den erwähnten Linearaktor mittels Kraft-/Momenten-Regelung die Prozesskraft einzustellen, was allerdings vergleichsweise aufwändig und teuer ist.

Bevor verschiedene Ausführungsbeispiele im Detail erläutert werden, wird zunächst ein allgemeines Beispiel einer robotergestützten Schleifvorrichtung beschrieben. Es versteht sich, dass die hier beschriebenen Konzepte auch auf andere Arten von Oberflächenbearbeitung (z.B. Polieren, Fräsen, Bohren, etc.) übertragbar und nicht auf Schleifen beschränkt sind. Wie erwähnt können die hier beschriebenen Ausführungsbeispiele als Linearaktoren (Handhabungsvorrichtungen) in den verschiedensten Anwendungen eingesetzt werden und stellen allgemein eine kostengünstige Alternative zu Linearaktoren dar, die mittels Pneumatikzylindern angetrieben werden.

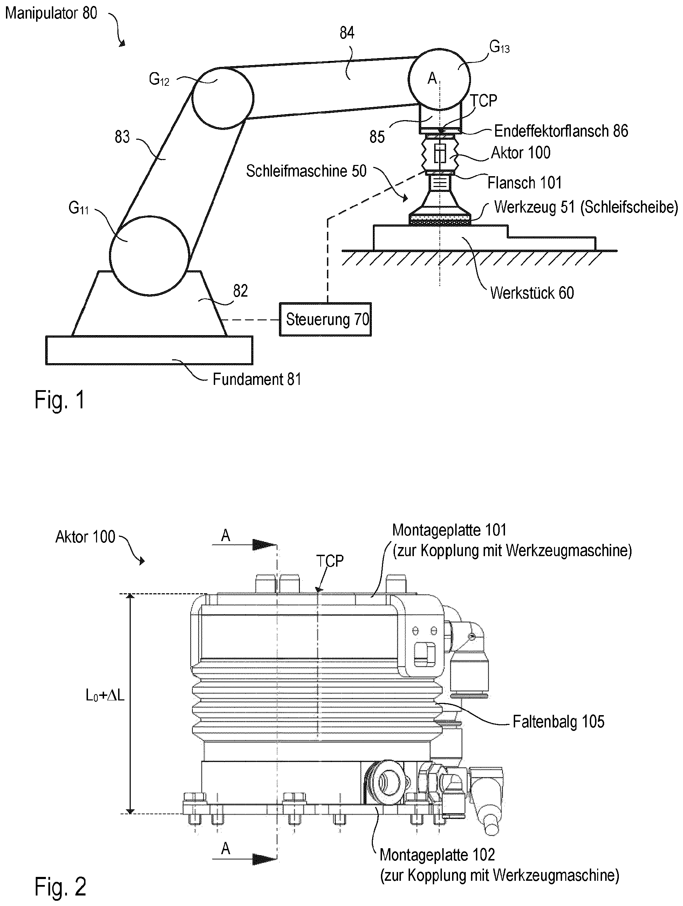

Gemäß Fig. 1 umfasst eine robotergestützte Schleifvorrichtung einen Manipulator 80, beispielsweise einen Industrieroboter und eine Schleifmaschine 50 mit rotierendem Schleifwerkzeug 51, wobei die Schleifmaschine 50 mit dem Endeffektor-Flansch des Manipulators 1 über einen Linearaktor 20 gekoppelt sein kann. Die Lage (Position und Orientierung) des Endeffektor-Flanschs legt auch den TCP fest. Der TCP ist genau genommen kein Punkt, sondern ein Vektor und kann z.B. durch drei Raumkoordinaten (Position) und drei Winkel (Orientierung) beschrieben werden. In der Robotik werden zur Beschreibung der Lage des TCPs manchmal auch generalisierte Koordinaten (meist sechs Gelenkwinkel des Roboters) im Konfigurationsraum verwendet. Position und Orientierung des TCPs werden manchmal auch als "Pose" bezeichnet. Die Position (inkl. Orientierung) des TCP als Funktion der Zeit definiert die Bewegung des Schleifwerkzeugs, die als Trajektorie bezeichnet wird. Als TCP wird oft der Mittelpunkt des Endeffektor-Flansches des Roboters definiert, was aber nicht notwendigerweise der Fall sein muss. Der TCP kann ein beliebiger Punkt sein (und theoretisch auch außerhalb des Roboters liegen), dessen Position und Orientierung vom Roboter einstellbar ist. Der TCP kann auch den Ursprung des Werkzeugkoordinatensystems definieren.

Im Falle eines Industrieroboters mit sechs Freiheitsgraden kann der Manipulator 80 aus vier Segmenten 82, 83, 84 und 85 aufgebaut sein, die jeweils über Gelenke G₁₁, G₁₂ und G₁₃ verbunden sind. Das erste Segment 82 ist dabei meist starr mit einem Fundament 81 verbunden (was jedoch nicht zwangsläufig der Fall sein muss). Das Gelenk G₁₁ verbindet die Segmente 82 und 83. Das Gelenk G₁₁ kann 2-achsig sein und eine Drehung des Segments 83 um eine horizontale Drehachse (Elevationswinkel) und eine vertikale Drehachse (Azimutwinkel) ermöglichen. Das Gelenk G₁₂ verbindet die Segmente 83 und 84 und ermöglicht eine Schwenkbewegung des Segments 84 relativ zur Lage des Segments 83. Das Gelenk G₁₃ verbindet die Segmente 84 und 85. Das Gelenk G₁₃ kann 2-achsig sein und daher (ähnlich wie das Gelenk G₁₁) eine Schwenkbewegung in zwei Richtungen ermöglichen. Der Endeffektor-Flansch und damit auch der TCP haben eine feste Relativposition zum Segment 85, wobei dieses üblicherweise noch ein Drehgelenk (nicht dargestellt) umfasst, welches eine Drehbewegung des am Segment 85 angeordneten Endeffektor-Flansches 86 um eine Längsachse A des Segments 85 ermöglicht (in Fig. 1 als strichpunktierte Line eingezeichnet, entspricht in dem dargestellten Beispiel auch der Drehachse des Schleifwerkzeugs). Jeder Achse eines Gelenks ist ein Aktor (z.B. ein Elektromotor) zugeordnet, der eine Drehbewegung um die jeweilige Gelenksachse bewirken kann. Die Aktoren in den Gelenken werden von einer Robotersteuerung 70 gemäß einem Roboterprogramm angesteuert. Verschiedene Industrieroboter/Manipulatoren und dazugehörige Steuerungen sind an sich bekannt und werden daher hier nicht weiter erläutert.

Der Manipulator 80 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 85, auf der der TCP liegt, mit A bezeichnet. Wenn der Aktor 100 an einem Endanschlag anliegt, ist mit der Pose des Endeffektor-Flanschs (bzw. des TCPs) auch die Pose der Schleifmaschine 50 (und auch des Werkzeugs / der Schleifscheibe 51) definiert. Wie eingangs bereits erwähnt, dient der Linearaktor 100 dazu, während des Schleifprozesses die Kontaktkraft (Prozesskraft) zwischen Werkzeug und Werkstück 60 auf einen gewünschten Wert einzustellen. Eine direkte Kraftregelung durch den Manipulator 80 ist für Schleifanwendungen in der Regel zu ungenau, da durch die hohe Massenträgheit der Segmente 83 bis 85 des Manipulators 80 eine schnelle Kompensation von Kraftspitzen (z.B. beim Aufsetzen des Schleifwerkzeugs auf das Werkstück 60) mit herkömmlichen Manipulatoren praktisch nicht möglich ist. Aus diesem Grund ist die Robotersteuerung 70 dazu ausgebildet, die Pose (Position und Orientierung) des TCP des Manipulators 80 zu regeln, während die Kraftregelung üblicherweise ausschließlich mit Hilfe des Aktors 100 bewerkstelligt wird.

Wie bereits erwähnt, kann während des Schleifprozesses die Kontaktkraft F_{K} zwischen Schleifwerkzeug (Schleifmaschine 50 mit Schleifscheibe 51) und Werkstück 60 mit Hilfe des Linear-Aktors 100 und einer Kraftregelung (die beispielsweise in der Steuerung 70 implementiert sein kann) so eingestellt werden, dass die Kontaktkraft F_{K} (in Richtung der Längsachse A) zwischen Schleifscheibe 51 und Werkstück 60 einem vorgebbaren Sollwert entspricht. Die Kontaktkraft F_{K} ist dabei eine Reaktion auf die Aktorkraft F_{A}, mit der der Linearaktor 100 auf die Werkstückoberfläche drückt. Bei fehlendem Kontakt zwischen Werkstück 60 und Werkzeug 51 fährt der Aktor 100 aufgrund der fehlenden Kontaktkraft am Werkstück 60 gegen einen Endanschlag (nicht dargestellt da im Aktor 100 integriert) und drückt mit einer definierten Kraft gegen diesen. Die Kraftregelung kann dabei durchgehend aktiv sein. In dieser Situation (kein Kontakt) ist die Aktorauslenkung daher maximal und der Aktor 100 befindet sich in einer Endposition. Die definierte Kraft, mit der der Aktor 100 gegen den Endanschlag drückt kann sehr klein sein oder (theoretisch) sogar auf null geregelt werden, um ein möglichst sanftes Kontaktieren der Werkstückoberfläche zu ermöglichen.

Die Positionsregelung des Manipulators 80 kann vollkommen unabhängig von der Kraftregelung des Aktors 100 arbeiten (die ebenfalls in der Steuerung 70 implementiert sein kann). Der Aktor 100 ist nicht verantwortlich für die Positionierung der Schleifmaschine 50, sondern lediglich für das Einstellen und Aufrechterhalten der erwünschten Kontaktkraft F_{K} während des Schleifprozesses und zur Erkennung von Kontakt zwischen Werkzeug 51 und Werkstück 60. Ein Kontakt kann z.B. in einfacher Weise dadurch erkannt werden, dass der Aktor sich aus der Endposition herausbewegt hat (Aktorauslenkung ist kleiner als die maximale Auslenkung am Endanschlag).

Es versteht sich, dass die Wirkrichtung des Aktors 90 und die Drehachse der Schleifmaschine 50 nicht notwendigerweise mit der Längsachse A des Segments 85 des Manipulators 80 zusammenfallen müssen. Im Falle eines pneumatischen Aktors kann die Kraftregelung in an sich bekannter Weise mit Hilfe eines Regelventils, eines Reglers (z.B. implementiert in der Steuerung 70) und eines Druckluftspeichers oder Kompressors realisiert werden. Da für die Berücksichtigung der Schwerkraft (d.h. der Gewichtskraft der Schleifmaschine 50) die Neigung zur Lotrechten relevant ist, kann der Aktor 100 einen Neigungssensor enthalten oder diese Information kann basierend auf den Gelenkwinkeln des Manipulators 80 ermittelt werden. Die ermittelte Neigung wird von dem Kraftregler berücksichtigt. Die konkrete Implementierung der Kraftregelung ist an sich bekannt und für die weitere Erläuterung nicht wichtig und wird daher auch nicht detaillierter beschrieben. Der Linearaktor 100 ermöglicht nicht nur eine gewisse mechanische Entkopplung zwischen Manipulator 80 und Werkstück 60, sondern ist auch in der Lage, Ungenauigkeiten in der Positionierung des TCP und/oder des Werkstücks auszugleichen.

Bei einer anderen Art der robotergestützten Oberflächenbearbeitung ist die Werkzeugmaschine über einen Linearaktor an einer ortsfesten Basis montiert, während ein herkömmlicher Industrieroboter ein Werkstück positionsgeregelt an die Werkzeugmaschine (z.B. eine Schleifmaschine) heranführt. Die Regelung der Prozesskraft wird wiederum durch den Linearaktor bewerkstelligt, während der Roboter auf herkömmliche Weise positionsgeregelt sein kann. Das heißt, der Linearaktor drückt (sich an der Basis abstützend) während des Oberflächenbearbeitungsprozesses die Werkzeugmaschine gegen das Werkstück, welches vom Roboter an einer definierten Position gehalten wird.

Der Linearaktor 100 wird im Folgenden auch als Handhabungsvorrichtung (*handling apparatus*) bezeichnet. Fig. 2 illustriert ein Ausführungsbeispiel in einer Seitenansicht. Die Vorrichtung weist gemäß Fig. 2 zwei gegenüberliegende Montageplatten 101 und 102 (Montageflansche) auf, wobei die erste Montageplatte 101 dazu ausgebildet ist, die Vorrichtung mechanisch mit einem Werkzeug (z.B. einem Greifer) oder einer Werkzeugmaschine zu koppeln (z.B. einer Schleifmaschine, einer Poliermaschine, etc.), und wobei die zweite Montageplatte 102 dazu ausgebildet ist, die Vorrichtung mechanisch mit dem Endeffektor-Flansch 86 eines Manipulators (siehe Fig. 1) zu koppeln. Beispielsweise wird die zweite Montageplatte 102 mittels Schrauben an dem Endeffektor-Flansch 86 montiert. Gleichermaßen kann die Werkzeugmaschine mittels Schrauben an der ersten Montageplatte 101 montiert werden. Alternative Montagemöglichkeiten (Klemmen, Bajonettverschluss, etc.) sind möglich.

Der zwischen den Montageplatten 101, 102 befindliche Innenraum der Handhabungsvorrichtung ist in dem dargestellten Beispiel mit einem Faltenbalg 105 abgedeckt. Dieser dient im Wesentlichen dazu, Staub und andere Verunreinigungen von den im Inneren befindlichen Komponenten der Vorrichtung fernzuhalten. Es sind auch andere Konstruktionen der Abdeckung möglich.

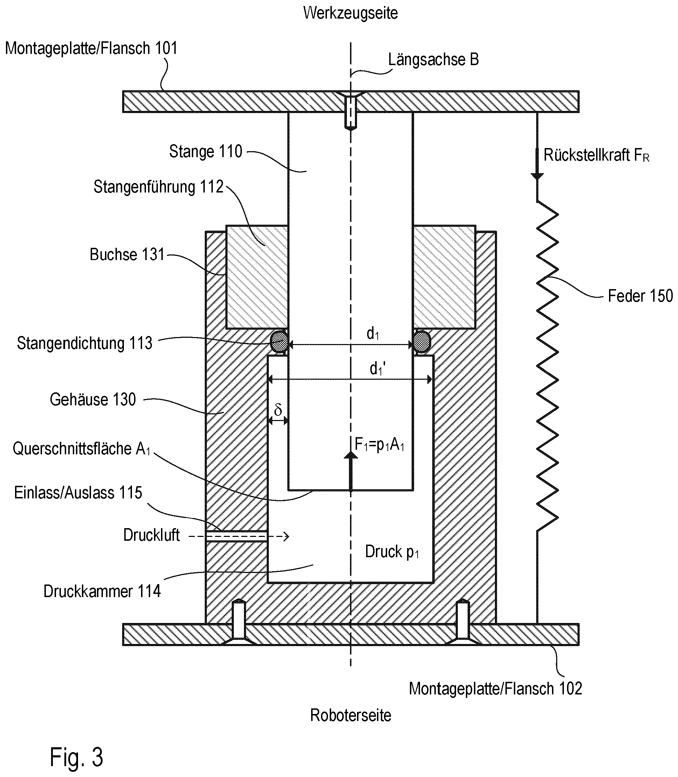

Fig. 3 illustriert ein erstes Beispiel der hier beschriebenen Handhabungsvorrichtung anhand einer schematischen Skizze. Vorab sei betont, es handelt sich dabei nicht um eine herkömmliche Kombination aus Kolben und (Pneumatik-) Zylinder, sondern lediglich um eine in einer Stangenführung 112 (*rod guidance*) geführte Stange 110 (*rod*), die in einen Innenraum eines Gehäuses 130 eingeführt ist. Eine gewöhnliche Stangendichtung 113 (*rod seal*) dichtet den Innenraum des Gehäuses 130 entlang des Umfangs der Stange 110 ab. Das heißt, die Stangendichtung 113 und die Stangenführung 112 sind axial (entlang der Längsachse B der Stange) voneinander beabstandet. Die Stange 110 ist in der Stangenführung 112 entlang ihrer Längsachse verschiebbar gelagert. In dem dargestellten Beispiel ist die Stangenführung 112 in einer im Gehäuse 130 angeordneten Buchse 131 angeordnet. Beispielsweise kann die Stangenführung 112 in die Buchse 131 eingepresst werden. Andere Techniken zur Befestigung der Stangenführung 112 in oder an dem Gehäuse 130 sind möglich. Die Stangenführung 112 kann eine Kugelumlaufführung sein oder eine solche enthalten. Die Stangenführung ist üblicherweise aus rostfreiem Stahl gefertigt. Verschiedene Stangenführungen sind an sich bekannt und kommerziell erhältlich und werden daher hier nicht weiter diskutiert.

Die Stangenführung 112 erlaubt eine Bewegung der Stange 110 nur in Längsrichtung (entlang der Längsachse B) und kann insbesondere Biegemomente aufnehmen, d.h. Drehmomente um eine Achse normal/quer zur Längsachse B. Stangenführungen werden auch als Wellenführungen, insbesondere auch als Linearlager bezeichnet. In einem Ausführungsbeispiel wird als Stangenführung ein Linearkugellager verwendet. Linearkugellager werden auch als Kugelbuchsen bezeichnet und haben den Vorteil, dass sie eine vergleichsweise geringe (praktisch keine) Haftreibung zwischen Lager und Stange verursachen, wodurch ein Stick-Slip-Effekt weitgehend vermieden wird.

Bei einer Verschiebung der Stange 110 ändert sich das Volumen des Innenraums des Gehäuses 130. Der Innenraum des Gehäuses kann mit Druckluft versorgt werden (siehe Fig. 3, Einlass/Auslass 115 für Druckluft), weshalb der Innenraum im Folgenden auch als Druckkammer 114 bezeichnet wird (Druck p₁). Die außerhalb des Gehäuses 130 liegende Stirnseite der Stange 110 ist mit einer der Montageplatten verbunden (im dargestellten Beispiel mit der Montageplatte/dem Flansch 101). Das Gehäuse 130 ist an der anderen Montageplatte montiert (im dargestellten Beispiel an der Montageplatte/dem Flansch 102). Die mechanischen Verbindungen zwischen Stange 110 und Montageplatte 101 sowie zwischen Gehäuse 130 und Montageplatte 102 können z.B. mittels Schrauben erfolgen. Jedoch sind auch andere Verbindungstechniken möglich (z.B. Kleben, Pressverbindungen, etc.).

Bei einem (Luft-) Druck p₁ in der Druckkammer 114 ist die auf die Stange 110 (entlang deren Längsachse B) wirksame Kraft F₁ gleich p₁·A₁, wobei A₁=d₁²*π*/4. Der Druck p₁ ist in der Regel ein Überdruck, d.h. größer als der Atmosphärendruck außerhalb der Druckkammer. Der Parameter d₁ bezeichnet dabei den Durchmesser der Stange 110 in der Druckkammer 114, insbesondere den Durchmesser der Stange 110 im Bereich der Stangendichtung 113. Die Druckkammer 114 hat in den hier diskutierten Beispielen die Form eines Zylinders mit dem Innendurchmesser d₁', wobei zwischen dem Umfang der Stange 110 und der Innenwand der Druckkammer 114 ein (Ring-) Spalt δ vorhanden ist (d.h. d₁'=d₁+2·δ). Die von der Druckluft bewirkte Kraft F₁ drückt die beiden Montageplatten 101 und 102 auseinander gegen die Wirkung einer Rückstellkraft F_{R}, die beispielsweise von einer Feder 150 erzeugt werden kann. Im dargestellten Beispiel wirkt die Feder 150 auch zwischen den beiden Montageplatten 101 und 102 und bewirkt eine von der Verschiebung ΔL (siehe Fig. 2) der Stange 110 abhängige Rückstellkraft F_{R} (F_{R}≈k·ΔL, wobei k die Federkonstante bezeichnet). Der minimale, beispielsweise durch einen Endanschlag definierte Abstand zwischen den Montageplatten 101 und 102 beträgt L₀ (ΔL=0, siehe Fig. 2). Der maximale Abstand zwischen den Montageplatten 101 und 102 kann ebenfalls durch einen Endanschlag festgelegt sein. Die Endanschläge sind in Fig. 3 nicht dargestellt. Es können anstatt der Feder 150 auch andere Rückstellelemente verwendet werden.

Anders als bei einer herkömmlichen Kolben/Zylinder-Kombination ist die pneumatisch wirksame Fläche gleich der Querschnittsfläche der Stange 110 im Bereich der Stangendichtung 113. In dem dargestellten Beispiel gibt es auch kein Äquivalent zu einer Kolbendichtung (die sich mit dem Kolben mitbewegen würde), sondern lediglich die in dem Gehäuse 130 montierte (und nicht mit der Stange bewegliche) Stangendichtung 113. Da in den hier beschriebenen Beispielen kein Kolben mit Kolbendichtung vorhanden ist, kann sich der im Inneren des Gehäuses 130 vorhandene Gasdruck p₁ in der gesamten Druckkammer 114 (also auch in den Ringspalt δ hinein) bis hin zur Stangendichtung 113 ausbreiten. Im Gegensatz dazu würde ein Kolben den Innenraum des Gehäuses 130 in zwei Druckkammern teilen, was in den hier beschriebenen Beispielen nicht der Fall ist. Das Gehäuse 130 beinhaltet nur eine (einzige) Druckkammer 114. Gleichzeitig sorgt Stangenführung 112 (Linearlager) für eine zuverlässige Aufnahme von Biegemomenten bei einer kompakten und kostengünstigen Bauweise. Bei herkömmlichen Aktuatoren, die normale Pneumatikzylinder verwenden, sind die Linearführungen, die nennenswerte Biegemomente aufnehmen können, separat neben dem Pneumatikzylinder (d.h. parallel dazu) angeordnet.

Das Gehäuse 130 kann beispielsweise aus Kunststoff gefertigt werden, beispielsweise mit einem Spritzgussverfahren oder mittels Additiver Fertigung (3D-Druck). Das Material, aus dem das Gehäuse 130 gefertigt ist, ist elastischer (weniger steif) als das Material, aus dem die Stangenführung besteht (üblicherweise Stahl). In einem anderen Beispiel ist das Gehäuse 130 mittels Aluminiumdruckgießen gefertigt. Eine spanende Bearbeitung (z.B. mittels Fräsen) ist lediglich im Bereich der Buchse 131 nötig und ggf. an der Oberfläche, die mit der Montageplatte 102 verbunden ist. Insgesamt ist der Linearaktor gemäß Fig. 3 im Wesentlichen einfacher und kostengünstiger herzustellen, als ein Linearaktor, in dem als Stellelement ein herkömmlicher Pneumatikzylinder verwendet wird.

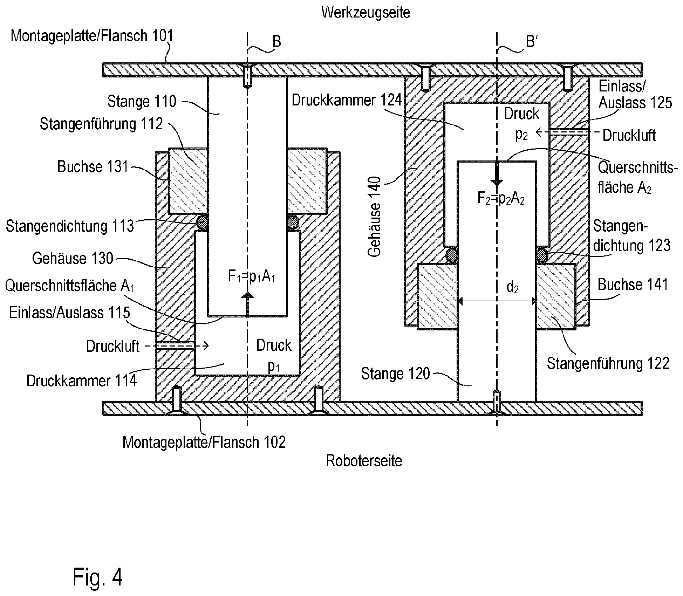

In dem in Fig. 4 dargestellten Beispiel ist eine weitere Anordnung mit einer Stange 120, einem Gehäuse 140, einer Stangenführung 122 und einer Stangendichtung 123 vorgesehen. Der linke Teil in Fig. 4 ist gleich aufgebaut wie in dem Beispiel aus Fig. 3 und es wird auf die obige Beschreibung verwiesen. Der rechte Teil der Vorrichtung in Fig. 4 ist analog zu dem linken Teil konstruiert, jedoch umgekehrt (*upside-down*) mit den Montageplatten 101, 102 verbunden. Die beiden Stellelemente mit den Längsachsen B und B' (jeweils umfassend ein Gehäuse mit Stangenführung und Stangendichtung und eine Stange) sind sozusagen antiparallel zueinander angeordnet.

Die dargestellte Anordnung mit zwei Stangen ist stabiler im Hinblick auf die Aufnahme von Biegemomenten und kann höhere Kräfte erzeugen. Die beiden Stellelemente können auch parallel (anstatt antiparallel) angeordnet sein. In diesem Fall wäre der rechte Teil der Vorrichtung in Fig. 4 gleich wie der linke Teil konstruiert und auf gleiche Weise mit den Montageplatten 101, 102 verbunden. In manchen Ausführungsbeispielen sind mehr als zwei Kombinationen aus Gehäuse mit Druckkammer, Stange und Stangenführung vorgesehen, um die maximale Aktorkraft zu erhöhen (bei gleichem Druck in den Drucckammern addieren sich pneumatisch wirksamen Stirnflächen der Stangen) und um die maximal möglichen Biegemomente zu erhöhen.

Das Gehäuse 140 des zweiten Stellelements ist mit der Montageplatte 101 verbunden (z.B. mittels Schrauben) und die außerhalb des Gehäuses 140 liegende Stirnseite der Stange 120 ist mit der gegenüberliegenden Montageplatte 102 verbunden (z.B. ebenfalls mittels einer Schraube). Das Gehäuse 140 weist eine Buchse 141 auf, in der die Stangenführung 122 angeordnet ist. Die Stangendichtung 123 ist (mit axialem Abstand) benachbart zu der Stangenführung 122 im Gehäuse 140 angeordnet (analog zum Gehäuse 130 und der Stangendichtung 113). Das Innere des Gehäuses 140 bildet eine Druckkammer 124, deren Volumen von der Position der Stange 120 abhängt. Über den Einlass/Auslass 125 kann Druckluft (Druck p₂) in die Druckkammer 124 gelangen. Die auf die Stange 120 wirkende Kraft F₂ ist proportional zum Druck p₂ und zur pneumatisch wirksamen Fläche A₂=d₂²*π*/4 (d.h. F₂=p₂·A₂).

In dem Beispiel aus Fig. 4 kann die Kombination aus der zweiten Stange 120 und der im zweiten Gehäuse 140 angeordneten zweiten Druckkammer 124 als Rückstellelement fungieren, wenn der Gasdruck p₂ in der zweiten Druckkammer 124 ein Unterdruck ist. Unter Unterdruck versteht man einen Druck p₂, der geringer ist als der Atmosphärendruck außerhalb der Vorrichtung. Eine mit Unterdruck beaufschlagte Druckkammer führt dazu, dass sich die jeweilige Kombination Stange/Gehäuse/Druckkammer sich praktisch wie eine Feder verhält, die eine Rückstellkraft erzeugt. Die Kraftregelung erfolgt in diesem Fall über die Einstellung des (Über-) Drucks in der jeweils anderen Druckkammer, da sich Überdruck in der Praxis besser regeln lässt als Unterdruck.

Wie schon in Bezug auf Fig. 3 erwähnt sind auch in diesem Beispiel die pneumatisch wirksamen Flächen A₁ und A₂ gleich den Querschnittsflächen der Stangen 110 und 120 im Bereich der Stangendichtungen 113 und 123. Die Flächen A₁ und A₂ können gleich sein. Kolbendichtungen werden - anders als bei konventionellen Lösungen - nicht benötigt. Die Stangendichtungen 113 und 123 sind in dem jeweiligen Gehäuse 130 bzw. 140 angeordnet und sind relativ zu dem jeweiligen Gehäuse 130 bzw. 140 nicht beweglich. Eine Feder ist in dem Beispiel nicht notwendig, weil die Rückstellkraft F₂ pneumatisch erzeugt wird. Nichtsdestotrotz kann zusätzlich eine Feder (ähnlich wie in Fig. 3) vorgesehen sein.

Wie erwähnt können die Gehäuse 130 und 140 aus einem Material bestehen, welches elastischer (weniger steif) ist, als das Material, aus dem die Stangenführungen 112, 122 gefertigt sind (üblicherweise Stahl). Beispielsweise sind die Gehäuse 130 und 140 aus Kunststoff (Spritzguss) oder Aluminium (Druckguss) gefertigt. Wie erwähnt sind auch additive Fertigungsverfahren (3D-Druck) möglich. Das relativ elastischere Gehäuse erlaubt es, Abweichungen von einer perfekten Parallelität der Längsachsen B und B' der Stangen 110 bzw. 120 auszugleichen (in gewissen Grenzen) und ein Feststecken des Linearaktors zu verhindern. Abweichungen von einer parallelen Ausrichtung der Längsachsen B und B' können einerseits aufgrund von fertigungsbedingten Toleranzen entstehen und andererseits aufgrund von Biegemomenten im Betrieb auftreten.

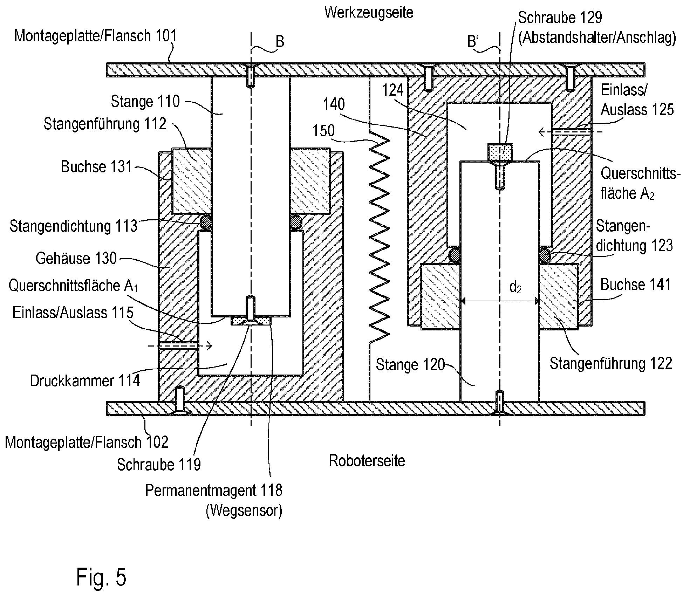

Fig. 5 illustriert ein weiteres Ausführungsbeispiel, welches dem Beispiel aus Fig. 4 sehr ähnlich ist. Bezüglich der Funktion entspricht das Ausführungsbeispiel aus Fig. 5 im Wesentlichen dem Beispiel aus Fig. 4, wobei zwei antiparallel angeordnete Stellelemente zwischen den Montageplatten 101 und 102 angeordnet sind. Zusätzlich ist eine Feder 150 zwischen den beiden Montageplatten 101, 102 als Rückstellelement angeordnet, das den Linearaktor/die Handhabungsvorrichtung in eine definierte Endposition bringt, auch wenn die Druckkammern 114 und 124 der beiden Stellelemente nicht mit Druck beaufschlagt sind.

Die Gehäuse 130 und 140 weisen wie im vorherigen Beispiel die Buchsen 131 bzw.141 für die Stangenführungen 112 und 122 auf. Koaxial zu den Stangenführungen 112, 122 sind die Stangendichtungen 113 und 123 im jeweiligen Gehäuse angeordnet. Die beiden Stangen 110 und 120 sind in den Stangenführungen 112 und 122 antiparallel geführt. Abhängig von der Stangenposition (d.h. abhängig von der Auslenkung ΔL des Linearaktors) variiert das Volumen der Druckkammern 114 und 124 im Gehäuse. In der in Fig. 5 dargestellten Situation ist die Auslenkung ΔL in einem mittleren Bereich. Das maximale Volumen der Druckkammern 114, 124 wird durch einen Endanschlag (nicht dargestellt) definiert. Die Stange 110 ist mittels der Schraube 111 mit der Montageplatte 101 starr verbunden. Gleichermaßen ist die Stange 120 mittels der Schraube 121 mit der Montageplatte 102 verbunden. Die zugehörigen Gehäuse 130 und 140 sind mit der jeweils anderen Montageplatte fest verbunden (z.B. verschraubt).

Im eingefahrenen Zustand (d.h. bei minimaler Auslenkung ΔL=0) dürfen die im Inneren der Druckkammern 114, 124 befindlichen Stirnseiten der Stangen 110 und 120 nicht vollständig an der Wand der Druckkammer anliegen, da sonst keine Flächen A₁ und A₂ mehr zur Verfügung stünden, an denen der Druck wirken und eine entsprechende Kraft p₁A₁ bzw. p₂A₂ entfalten kann. Die in Fig. 5 dargestellte, in die Stirnseite der Stange 120 eingeschraubte Schraube 129 bildet einen Endanschlag für den eingefahrenen Zustand. Die Schraube 129 steht von der Stirnseite der Stange 110 ab und bildet damit auch einen Abstandhalter, sodass zumindest ein Teil der Querschnittsfläche A₂ pneumatisch wirksam bleibt und sich im auch vollständig eingefahrenen Zustand aufgrund des Drucks p₂ in der Druckkammer 124 eine Kraft auf die Stange entfalten kann. Aufgrund der mechanischen Kopplung der beiden Stangen 110, 120 und der zugehörigen Gehäuse 130, 140 mit den Montageplatten 101, 102 ist an der Stange 110 ein Abstandshalter nicht unbedingt notwendig.

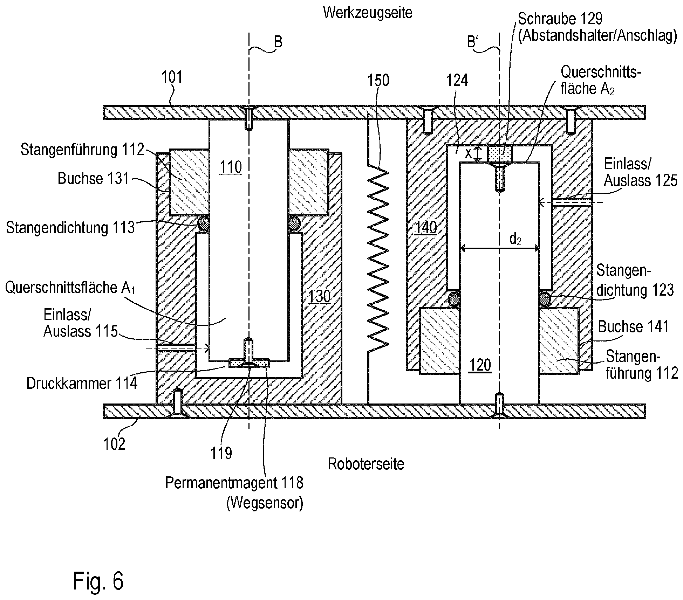

An der anderen Stange (linke Stange 110) kann mit einer Schraube 119 ein Permanentmagnet 118 befestigt sein, der Teil eines magnetischen Wegsensors (*displacement sensor,* in Fig. 5 und 6 nicht dargestellt) ist. Der Wegsensor ist dazu ausgebildet die Auslenkung ΔL des Linearaktors zu messen. Verschiedene Typen geeigneter magnetischer und anderer Wegsensoren sind an sich bekannt und werden daher nicht weiter diskutiert. Relevant für das dargestellte Beispiel ist der am der Stange 110 montierte und mit dieser mitbewegte Magnet 118, der eine einfache Verschiebungsmessung ermöglicht.

Fig. 6 zeigt die Vorrichtung aus Fig. 5 in einem vollständig eingefahrenen Zustand (ΔL=0). Man kann sehen, dass der Schraubenkopf der Schraube 129 einen Endanschlag bildet und an (einer der Stirnseite der Stange 120 gegenüber liegenden) Wand der Druckkammer 124 anliegt. Nur der Schraubenkopf der Schraube 129 liegt an der Wand der Druckkammer 124 an, nicht jedoch die Stirnseite der Stange 120. Diese ist in der dargestellten Position (ΔL=0) einen Abstand x von der gegenüber liegenden Wand der Drucckammer 124 beabstandet. Es versteht sich, dass die Schraube 129 anstatt in der Stirnseite der Stange 120 auch in die gegenüber liegende Wandfläche der Druckkammer 124 eingeschraubt sein kann. Anstatt der Schraube 129 kann ein Abstandshalter auch direkt an die Gehäusewand oder die Stange angeformt sein. Abstandshalter und Gehäuse 140 können ein Teil sein (z.B. ein Gussteil).

## Patentansprüche

1. Eine Vorrichtung, die aufweist:
ein erstes Gehäuse (130) mit einer ersten Druckkammer (114);
eine von außen in die erste Druckkammer (114) des ersten Gehäuses (130) eingeführte erste Stange (110);
eine um die erste Stange (110) angeordnete erste Stangendichtung (113), welche die erste Druckkammer (114) abdichtet, wobei im Inneren der ersten Druckkammer (114) ein nicht abgedichteter Ringspalt (δ) zwischen der ersten Stange und einer Innenwand der ersten Druckkammer (114) vorhanden ist, sodass ein in der ersten Druckkammer (114) vorhandener Gasdruck (p₁) sich in der gesamten ersten Druckkammer (114) bis hin zur ersten Stangendichtung (113) ausbreiten kann;
eine an dem ersten Gehäuse (130) montierte erste Stangenführung (112), welche dazu ausgebildet ist, die erste Stange (110) entlang ihrer Längsachse zu führen; und
ein Rückstellelement (150), welches so angeordnet ist, dass es einer von dem Gasdruck (p₁) bewirkten Kraft auf die erste Stange (110) entgegenwirken kann,
**dadurch gekennzeichnet, dass**
die Vorrichtung eine erste Montageplatte (101) und eine zweite Montageplatte (102) aufweist, wobei die erste Montageplatte (101) mit der ersten Stange (110) fest verbunden ist und wobei die zweite Montageplatte (102) mit dem ersten Gehäuse (130) fest verbunden ist, und dass
das Rückstellelement außerhalb des ersten Gehäuses (130) zwischen der ersten Montageplatte (101) und der zweiten Montageplatte (102) angeordnet ist, wobei das Rückstellelement dazu ausgebildet ist, eine anziehende Kraft (F_{R}, F₂) zwischen der ersten Montageplatte (101) und der zweiten Montageplatte (102) zu erzeugen.

2. Die Vorrichtung gemäß Anspruch 1,
wobei das erste Gehäuse (130) eine einzige Druckkammer (114) aufweist und wobei in der gesamten ersten Druckkammer im Wesentlichen der gleiche Druck herrscht.

3. Die Vorrichtung gemäß Anspruch 1 oder 2,
wobei das erste Gehäuse (130) außerhalb der Druckkammer (114) eine Buchse (131) aufweist und die erste Stangenführung (112) in der Buchse (131) angeordnet ist.

4. Die Vorrichtung gemäß einem der Ansprüche 1 bis 3,
wobei die erste Stangendichtung (113) in einer Nut des ersten Gehäuses (130) angeordnet ist, welche um die erste Stange (110) herum verläuft.

5. Die Vorrichtung gemäß einem der Ansprüche 1 bis 4, das weiter aufweist:
ein zweites Gehäuse (140) mit einer zweiten Druckkammer (124), wobei das zweite Gehäuse (140) mit der ersten Montageplatte (101) fest verbunden ist;
eine von außen in die zweite Druckkammer (124) des zweiten Gehäuses (140) eingeführte zweite Stange (120), die mit der zweiten Montageplatte (102) fest verbunden ist;
eine um die zweite Stange (110) angeordnete zweite Stangendichtung (123), welche die zweite Druckkammer (124) abdichtet, wobei im Inneren der zweiten Druckkammer (124) ein nicht abgedichteter Ringspalt (δ) zwischen der zweiten Stange (120) und einer Innenwand der zweiten Druckkammer (124) vorhanden ist, sodass ein in der zweiten Druckkammer (124) vorhandener Gasdruck (p₂) sich in der gesamten zweiten Druckkammer (124) bis hin zur zweiten Stangendichtung (123) ausbreiten kann; und
eine an dem zweiten Gehäuse (140) montierte zweite Stangenführung (122), welche dazu ausgebildet ist, die zweite Stange (120) entlang ihrer Längsachse (B') zu führen.

6. Die Vorrichtung gemäß einem der Ansprüche 1 bis 5,
wobei das Rückstellelement eine Feder (150) ist.

7. Die Vorrichtung gemäß Anspruch 5,
wobei das Rückstellelement durch die Kombination aus zweiter Druckkammer (124) und zweiter Stange (120) gebildet wird, wobei der in der zweiten Druckkammer (124) vorhandene Gasdruck (p₂) ein Unterdruck ist.

8. Die Vorrichtung gemäß einem der Ansprüche 1 bis 7, die weiter aufweist:
einen als Endanschlag dienenden Abstandshalter (129), der entweder an einer in der ersten Druckkammer (114) liegenden Stirnseite der ersten Stange (110) oder an einer der Stirnseite der ersten Stange (110) gegenüber liegenden Wand der zweiten Druckkammer (124) angeordnet ist und,
wobei der Anstandshalter (29) in einer eingefahrenen Endposition der Vorrichtung einen Abstand (x) zwischen der Stirnfläche der ersten Stange (110) und der gegenüber liegenden Wand der ersten Druckkammer (114) sicherstellt.

9. Die Vorrichtung gemäß Anspruch 8,
wobei der Abstandhalter (129) in die ersten Stange (110) oder das erste Gehäuse (130) eingeschraubt ist oder
wobei der Abstandhalter (129) ein integraler Bestandteil des ersten Gehäuses (130) oder der ersten Stange (130) ist.

10. Die Vorrichtung gemäß einem der Ansprüche 1 bis 9,
wobei das erste Gehäuse (130) aus einem Material gefertigt ist, das elastischer ist als das Material aus dem die erste Stange (110) gefertigt ist.

11. Die Vorrichtung gemäß einem der Ansprüche 1 bis 10,
wobei die Vorrichtung als pneumatischer Linearaktor fungiert, und wobei die erste Stangenführung (112) dazu ausgebildet ist, Biegemomente aufzunehmen.

12. Die Vorrichtung gemäß Anspruch 11,
wobei die erste Stangenführung (112) ein Linearlager, insbesondere ein Linearkugellager oder eine Kugelbuchse ist.

13. Die Vorrichtung gemäß einem der Ansprüche 11 oder 12,
wobei die erste Stangenführung (112) in einer Buchse des Gehäuses (130) außerhalb der Druckkammer und von der Stangendichtung (113) beabstandet angeordnet ist.

14. Ein System, das folgendes umfasst:
einen Manipulator;
eine an einem Endeffektorflansch des Manipulators montierte Vorrichtung gemäß einem der Ansprüche 1 bis 10,
und ein an der Vorrichtung montiertes Werkzeug oder eine an der Vorrichtung montierte Werkzeugmaschine.

15. Ein System, das folgendes umfasst:
einen Manipulator zum Halten und Positionieren eines Werkstücks;
eine an einer Basis montierte Vorrichtung gemäß einem der Ansprüche 1 bis 10,
und ein an der Vorrichtung montiertes Werkzeug oder eine an der Vorrichtung montierte Werkzeugmaschine.

## Claims

1. A device, having:
a first housing (130) having a first pressure chamber (114);
a first rod (110) inserted from the outside into the first pressure chamber (114) of the first housing (130);
a first rod seal (113) arranged around the first rod (110) and sealing the first pressure chamber (114), wherein, in the interior of the first pressure chamber (114), there is an unsealed annular gap (δ) between the first rod and an inner wall of the first pressure chamber (114), so that a gas pressure (p₁) present in the first pressure chamber (114) can spread throughout the entire first pressure chamber (114) up to the first rod seal (113);
a first rod guide (112) mounted on the first housing (130) and configured to guide the first rod (110) along its longitudinal axis; and
a return element (150) which is arranged so that it can counteract a force caused by the gas pressure (p₁) on the first rod (110),
**characterized in that**
the device has a first mounting plate (101) and a second mounting plate (102), wherein the first mounting plate (101) is fixedly connected to the first rod (110) and wherein the second mounting plate (102) is fixedly connected to the first housing (130), and that
the return element is arranged outside the first housing (130) between the first mounting plate (101) and the second mounting plate (102), wherein the return element is designed to generate an attractive force (F_{R}, F₂) between the first mounting plate (101) and the second mounting plate (102).

2. The device according to claim 1,
wherein the first housing (130) has a single pressure chamber (114) and wherein substantially the same pressure prevails throughout the entire first pressure chamber.

3. The device according to claim 1 or 2,
wherein the first housing (130) has a bushing (131) outside the pressure chamber (114) and the first rod guide (112) is arranged in the bushing (131).

4. The device according to any one of claims 1 to 3,
wherein the first rod seal (113) is arranged in a groove of the first housing (130) which extends around the first rod (110).

5. The device according to any one of claim 1 to 4, further having:
a second housing (140) having a second pressure chamber (124), the second housing (140) being fixedly connected to the first mounting plate (101);
a second rod (120) inserted from the outside into the second pressure chamber (124) of the second housing (140) and fixedly connected to the second mounting plate (102);
a second rod seal (123) arranged around the second rod (110) and sealing the second pressure chamber (124), wherein, in the interior of the second pressure chamber (124), there is an unsealed annular gap (δ) between the second rod (120) and an inner wall of the second pressure chamber (124), so that a gas pressure (p₂) present in the second pressure chamber (124) can spread throughout the entire second pressure chamber (124) up to the second rod seal (123);
a second rod guide (122) mounted on the second housing (140) and configured to guide the second rod (120) along its longitudinal axis (B').

6. The device according to any one of claims 1 to 5,
wherein the return element is a spring (150).

7. The device according to claim 5,
wherein the return element is formed by the combination of the second pressure chamber (124) and the second rod (120), wherein the gas pressure (p₂) present in the second pressure chamber (124) is a negative pressure.

8. The device according to any one of claim 1 to 7, further having:
a spacer (129) serving as an end stop and arranged either on an end face of the first rod (110) located in the first pressure chamber (114) or on a wall of the second pressure chamber (124) opposite the end face of the first rod (110), and
wherein the spacer (29) ensures a distance (x) between the end face of the first rod (110) and the opposite wall of the first pressure chamber (114) in a retracted end position of the device.

9. The device according to claim 8,
wherein the spacer (129) is screwed into the first rod (110) or the first housing (130), or
wherein the spacer (129) is an integral part of the first housing (130) or the first rod (110).

10. The device according to any one of claims 1 to 9,
wherein the first housing (130) is made of a material that is more elastic than the material from which the first rod (110) is made.

11. The device according to any one of claims 1 to 10,
wherein the device functions as a pneumatic linear actuator, and wherein the first rod guide (112) is designed to absorb bending moments.

12. The device according to claim 11,
wherein the first rod guide (112) is a linear bearing, in particular a linear ball bearing or a ball bushing.

13. The device according to any one of claims 11 or 12, wherein the first rod guide (112) is arranged in a bushing of the housing (130) outside the pressure chamber and spaced from the rod seal (113).

14. A system, comprising:
a manipulator;
a device according to any one of claims 1 to 10 mounted on an end effector flange of the manipulator,
and a tool mounted on the device or machine tool mounted on the device.

15. A system, comprising:
a manipulator for holding and positioning a workpiece;
a base-mounted device according to any one of claims 1 to 10,
and a tool mounted on the device or machine tool mounted on the device.

## Revendications

1. Dispositif, comportant :
un premier boîtier (130) comportant une première chambre de pression (114) ;
une première tige (110) insérée depuis l'extérieur dans la première chambre de pression (114) du premier boîtier (130) ;
un premier joint de tige (113) disposé autour de la première tige (110), qui scelle la première chambre de pression (114), dans lequel à l'intérieur de la première chambre de pression (114) se trouve un espace annulaire non scellé (δ) entre la première tige et une paroi intérieure de la première chambre de pression (114), de sorte qu'une pression de gaz (p₁) présente dans la première chambre de pression (114) peut se propager dans toute la première chambre de pression (114) jusqu'au premier joint de tige (113) ;
un premier guide de tige (112) monté sur le premier boîtier (130) et configuré pour guider la première tige (110) le long de son axe longitudinal ; et
un élément de rappel (150) qui est disposé de manière à pouvoir contrer une force provoquée par la pression du gaz (p₁) sur la première tige (110),
**caractérisé en ce que**
le dispositif comprend une première plaque de montage (101) et une seconde plaque de montage (102), dans lequel la première plaque de montage (101) est reliée de manière fixe à la première tige (110) et dans lequel la seconde plaque de montage (102) est reliée de manière fixe au premier boîtier (130), et **en ce que**
l'élément de rappel est disposé à l'extérieur du premier boîtier (130) entre la première plaque de montage (101) et la seconde plaque de montage (102), dans lequel l'élément de rappel est conçu pour générer une force d'attraction (F_{R}, F₂) entre la première plaque de montage (101) et la seconde plaque de montage (102).

2. Dispositif selon la revendication 1,
dans lequel le premier boîtier (130) présente une seule chambre de pression (114) et dans lequel sensiblement la même pression règne dans toute la première chambre de pression.

3. Dispositif selon la revendication 1 ou 2,
dans lequel le premier boîtier (130) présente une douille (131) à l'extérieur de la chambre de pression (114) et le premier guide de tige (112) est disposé dans la douille (131).

4. Dispositif selon l'une des revendications 1 à 3,
dans lequel le premier joint de tige (113) est disposé dans une rainure du premier boîtier (130) qui s'étend autour de la première tige (110).

5. Dispositif selon l'une des revendications 1 à 4, qui présente en outre :
un second boîtier (140) comportant une seconde chambre de pression (124), dans lequel le second boîtier (140) est relié de manière fixe à la première plaque de montage (101) ;
une seconde tige (120) insérée de l'extérieur dans la seconde chambre de pression (124) du second boîtier (140) et reliée de manière fixe à la seconde plaque de montage (102) ;
un second joint de tige (123) disposé autour de la seconde tige (110), qui scelle la seconde chambre de pression (124), dans lequel à l'intérieur de la seconde chambre de pression (124) se trouve un espace annulaire non scellé (δ) entre la seconde tige (120) et une paroi intérieure de la seconde chambre de pression (124), de sorte qu'une pression de gaz (p₂) présente dans la seconde chambre de pression (124) peut se propager dans toute la seconde chambre de pression (124) jusqu'au second joint de tige (123) ; et
un second guide de tige (122) monté sur le second boîtier (140) et configuré pour guider la seconde tige (120) le long de son axe longitudinal (B').

6. Dispositif selon l'une des revendications 1 à 5,
dans lequel l'élément de rappel est un ressort (150).

7. Dispositif selon la revendication 5,
dans lequel l'élément de retour est formé par la combinaison de la seconde chambre de pression (124) et de la seconde tige (120), dans lequel la pression de gaz (p₂) présente dans la seconde chambre de pression (124) est une pression négative.

8. Dispositif selon l'une des revendications 1 à 7, qui présente en outre :
une entretoise (129) servant de butée, qui est disposée soit sur une face d'extrémité de la première tige (110) située dans la première chambre de pression (114), soit sur une paroi de la seconde chambre de pression (124) opposée à la face d'extrémité de la première tige (110) et,
dans lequel l'entretoise (29) assure une distance (x) entre la face d'extrémité de la première tige (110) et la paroi opposée de la première chambre de pression (114) dans une position d'extrémité rétractée du dispositif.

9. Dispositif selon la revendication 8,
dans lequel l'entretoise (129) est vissée dans la première tige (110) ou le premier boîtier (130) ou
dans lequel l'entretoise (129) fait partie intégrante du premier boîtier (130) ou de la première tige (130).

10. Dispositif selon une des revendications 1 à 9,
dans lequel le premier boîtier (130) est constitué d'un matériau qui est plus élastique que le matériau à partir duquel la première tige (110) est constituée.

11. Dispositif selon une des revendications 1 à 10,
dans lequel le dispositif fonctionne comme un actionneur linéaire pneumatique, et dans lequel le premier guide de tige (112) est conçu pour absorber les moments de flexion.

12. Dispositif selon la revendication 11,
dans lequel le premier guide de tige (112) est un palier linéaire, en particulier un roulement à billes linéaire ou une douille à billes.

13. Dispositif selon l'une des revendications 11 à 12,
dans lequel le premier guide de tige (112) est disposé dans une douille du boîtier (130) à l'extérieur de la chambre de pression et espacé du joint de tige (113).

14. Système, qui comprend les éléments suivants :
un manipulateur ;
un dispositif selon l'une des revendications 1 à 10 monté sur une bride effectrice terminale du manipulateur,
et un outil monté sur le dispositif ou une machine-outil montée sur le dispositif.

15. Système, qui comprend les éléments suivants :
un manipulateur pour maintenir et positionner une pièce ;
un dispositif monté sur socle selon l'une quelconque des revendications 1 à 10,
et un outil monté sur le dispositif ou une machine-outil montée sur le dispositif.
